# EUROPEAN PATENT APPLICATION

(11) **EP 2 131 054 A2**
(43) Date of publication of application: **09.12.2009**
(21) Application number: 09159797.1
(22) Date of filing: 08.05.2009
(51) Int. Cl.: F16D 1/06, F16D 1/10

(54) **Mechanical coupling**

(30) Priority: 12.05.2008 SE 0801066
(71) Applicant: IBA Handelsbolag, 125 44 Älvsjö (SE)
(72) Inventor: Bozic, Radovan, 76100, Brcko (BA)
(74) Representative: Strandin, Heléne

(57) **Abstract**

A jointing for torque transfer between at least one shaft (1) and at least one element placed (2) on the shaft (1) is provided, The shaft (1) comprises at least two eccentrically placed sections (3), wherein the combined axial cross-section (12) of at least two of said sections (3) corresponds to a through-going hole (5) in the element (2) or elements (2) placed on the shaft (1), which enables torque transfer between the shaft (1) and an element (2) placed on the shaft (1), when said element is placed over at least two of said sections (3). At least one of the at least two eccentrically placed sections (3) is at least as wide (7) in the length axis of the shaft (1) as the hole (5) for said shaft (1) in the element (2) placed on the shaft (1), which enables rotation of the element (1) placed on the shaft (1) without any torque transfer when it is positioned with the hole (5) axially entirely over a section (3) of such width (7).

## Description

### TECHNICAL FIELD

The present invention is in the area of transferring of mechanical torque between hubs and shafts

### BACKGROUND

Traditionally, gear wheels are being placed on shaft for torque transfer between the hub and the shaft by the hub being equipped with a circular hole in which the shaft can be placed. The lock needed to enable torque transfer is usually achieved by a feather key being placed in a keyway in the shaft and a corresponding keyway in the hub. For achieving the tolerance required, the keyway in the hub has to be manufactured using a pull broach, which can only be used in particular machine tools. Furthermore, the subsequent thermal treatment deforms the keyway which leads to loss of the required tolerance. The keyway in the shaft is usually manufactured by milling, but analogous to the hub, also the keyway in the shaft looses the required tolerance in the subsequent thermal treatment. The problem with the lost tolerances is usually solved through adjustment of the feather key at assembly, which is time consuming and requires large knowledge in the subject. The limited surface which transfers torque when using a feather key joint and the sharp fillets which are present around the keyway joint also leads to large concentrations of tension which in turn gives large material strains with subsequent emerging of cracks and failure of the joint.

Another common type of joint for torque transfer between shafts and hubs is splines, which comprises a multiplicity of keyways in the shaft and in the hub. This type of joint, as the key joint, requires very specialized machines for manufacturing along with its tolerances being affected negatively by subsequent thermal treatment. For good fit of splines a tolerance of IT9 is required, however, using sanding of hardened shafts it is not possible to achieve a higher tolerance than IT12. The sharp edges that arises at the torque transferring part of splines also leads to large concentrations of tension which could lead to the emerging of cracks, or in worst the case, failure.

Known technologies for torque transfer with eccentric shaft is described in GB 124918, in which an eccentrically placed groove in the hub locks the hub radially with an eccentric section of the shaft. This construction has a number of disadvantages: The hole becomes eccentrically placed which, when the material of the shaft and hub are different, creates eccentric weight distribution in the entire shaft construction. Furthermore the sharp edges of the groove create concentrations of tension which, equivalent to previously discussed feather joints, can lead to the emerging of cracks and failure. Furthermore, both the shaft and the hub become very difficult and expensive to manufacture. The shaft must be made with an eccentric turning lathe from a heavily over-dimensioned work piece and the hub must be machined with both drilling and milling tools.

Furthermore, described in JP 104721 is a ring with a centered hole and an eccentric groove, loosely mounted to a shaft, an eccentric portion of the hub fits the eccentric groove which create a radial locking. The grip that arises with the shaft is dependent upon the friction between the shaft and the hub when the shaft is rotated. The hub has a larger contacting surface against the shaft than the ring and the hub clamps the shaft by the centered holes in the ring and the hub being displaced, respectively. The biggest disadvantage with this joint is that rotation is needed for the creation of grip which will require a minimal rotational speed and make it impossible to rapidly alter the direction of rotation, except for that, the friction, and thereby the grip, will be dependent upon the wear of the parts and the existence of lubricants which are usually used together with gearwheels in for example a gearbox.

DE3221317 describes an eccentric fastening that easily can be loosened by the shaft having eccentrically placed circular discs which fits in eccentrically placed circular holes in the hub.

Since the hub freely can be moved axially and be rotated without the transfer of torque in the larger hollow spaces between the eccentric holes adapted for the circular discs, the hub can gradually be loosened by rotation and fitting to the eccentric hubs. The disadvantages with this solution are that the holes in the hub are eccentrically placed which can create an uneven weight distribution when the materials in the hub and the shaft are different. Furthermore the solution requires a lot of space, compared to the torque transferring surface, which is a problem since the industry of today demands small and compact gears. The manufacturing process of the hub is also complicated since the larger hollow spaces and the eccentrically placed center hole needs to be milled inside of the hub through one of the eccentric holes on the sides of the hub.

### SUMMARY

The purpose of the present invention is to achieve a joint for torque transfer which reduces the problems with the known technologies. It is also a purpose that the elements placed on the shaft can be easily loosened and that the weight distribution becomes as even as possible.

The present invention relates to, according to a first aspect, a jointing for torque transfer between at least one shaft and an element placed on the shaft. The radial lock that is required for torque transfer is achieved by the shaft comprising at least two eccentrically placed sections, wherein at least two of these sections combined cross-section corresponds to a through-going hole in the element placed on the shaft. Preferably, the eccentrically placed sections are circular and placed next to each other. The combined axial cross-section of the eccentrically placed sections will then be as two radially displaced circles in inverse directions, which by the relatively small displacements needed for torque transfer in accordance to the present invention can be said to be essentially stadium shaped. The corresponding stadium shape is present in the through-going hole in the placed element.

Preferably, the hole is centered and the placed element symmetric for achieving an advantageous weight distribution.

The element placed on the shaft is preferably gear, chain or belt wheel.

The eccentrically placed sections of the shaft are preferably placed with the eccentric portions in strictly inverse directions. Two eccentrically placed sections next to each other constitute a pair. When more than one pair is present on the same shaft, they are preferably placed such that the eccentric sections of the first pair is in the same direction as the eccentric portions of the second pair, which simplifies the manufacturing and with a turning lathe and gives an advantageous weight distribution. However it is also conceivable that a length axis of a cross-section of a pair is radially displaced at an angle in relation to a length axis of a cross-section of one or more other pairs, e.g. 85° through 95°, preferably 90°.

When more than one element shall be placed on the shaft such as in a gearbox with multiple gears, it is conceivable that the combined area of a cross-section of a pairs eccentrically placed sections are different from the combined area of a cross-section of the eccentrically placed section of another pair, on the same shaft. It is also conceivable with differences in eccentricity of the eccentrically placed sections, i.e. the radial displacement between two sections that constitute a pair can vary between two or more pairs on the same shaft. This could depend on differences in the space available in for example a gearbox or differences in size of the element placed on the shaft or differences in the torque that should be transferred between the shaft and a specific element placed on the shaft.

Preferably, some of the eccentrically sections of the shaft is at least as wide in the length axis of the shaft as the hole of the element placed on the shaft, which enables rotation of the element placed thereon without any transfer of torque, when it is axially positioned with the hole entirely over this wide eccentrically placed section.

The shaft with the eccentrically placed sections is preferably equipped with at least one stop for axial locking of the elements placed thereon, the stop could for example consist of a section of the shaft which size and placing is such that it locks at least one element placed thereon in at least one direction. When for example gear wheels are placed on the shaft, this is preferably done from the other end against the axial stop. When the shaft has two eccentric sections with different cross-sectional areas, the largest cross-sectional area is preferably placed closest to the stop and thereafter the eccentric sections are placed from larges to smallest towards the end of the shaft.

### BRIEF DESCRIPTION OF THE DRAWINGS

Fig. 1 shows a shaft, according to a first embodiment, with a hub placed thereon,
Fig. 2 shows an essentially stadium-shaped cross-section of the shaft in accordance with fig. 1.
Fig. 3 shows a gear wheel with a stadium-shaped hole.
Fig. 4 shows a shaft, according to a second embodiment, with two different diameters of the eccentrically placed sections and three gear wheels placed on the shaft.
Fig. 5 shows a cross-section of a gear wheel.
Fig. 6 shows a gear wheel with a stop.
Fig. 7 shows a shaft, according to a third embodiment, with a stop on each side of the gear wheels which enables the placing of hubs from both directions.
Fig. 8 shows a shaft, according to a third embodiment, where two pairs of eccentrically placed sections are radially displaced with a 90° angle, and the cross-section of the shaft.

### DETAILED DESCRIPTION

### Definitions

An element placed on the shaft can be a hub, a wheel or wheel shaped element such as gear, chain, belt and flywheels. It is also conceivable with other symmetric elements such as polygons which can act as torque transferors or torque accumulators. Furthermore it is conceivable with elements with the purpose of acting as distance elements or elements with a direct mechanical purpose such as stirring elements, propellers, tools or spools for rope or wire.

Eccentrically placed sections are to be understood as preferably a part of the shaft itself, which for example is radially displaced by machining in relation to the center axis of the shaft. It is furthermore conceivable that a part which is separately mounted on the shaft constitutes the eccentrically placed sections.

Placed next to each other is to be understood as two eccentric sections on the shaft do not have any additional deliberately placed eccentric section between each other on the shaft. It is however conceivable that the sections are placed either in direct contact with each other or with a distance which can constitute the shaft itself or a distance element.

A pair is two eccentrically placed sections next to each other.

A pairs combined cross-section is the largest cross-section that two eccentrically placed sections has together, axially, i.e. the shape of the smallest through-going hole that a pair can be placed through in the length axis of the shaft.

Stadium shaped is the shape of the periphery of the shape which is formed when a circle is parted in half and the two parts are displaced along an axis, a rectangular parallelepiped is placed between the parts, which side perpendicular to the axis has the length of the diameter of the circle, and side in the length axis has the length of the distance which the two semi-circles has been parted. Substantially stadium-shaped is to be understood as the shape of the cross-section of two eccentrically placed circular elements combined.

The invention shall now be described in further detail with assistance of embodiments, with reference to the accompanying drawings, without the invention being interpreted limiting to the drawings.

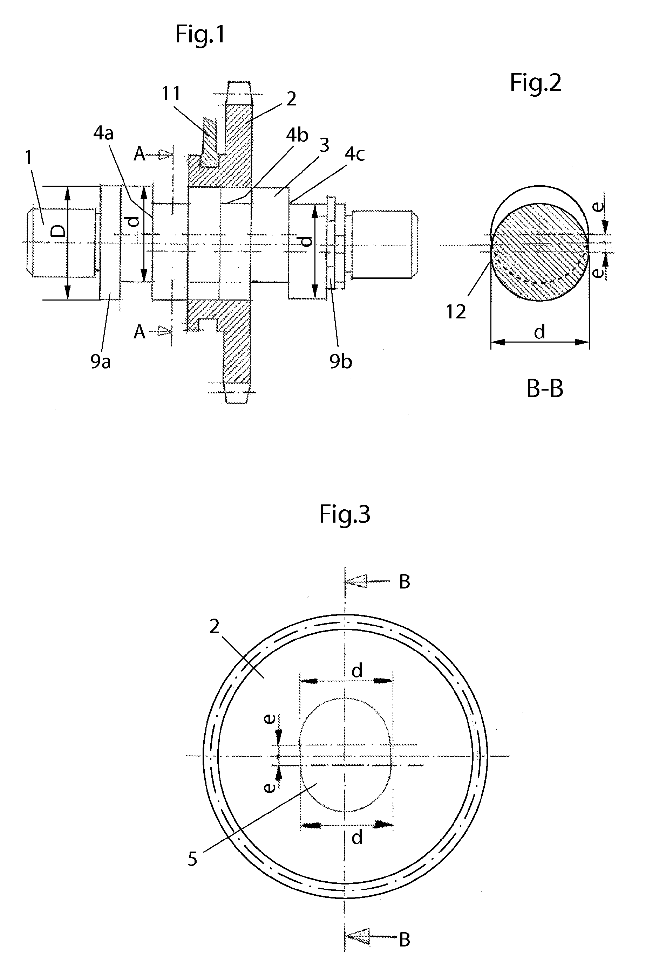

Fig. 1 shows a shaft 1, according to a first embodiment, and how the shaft 1 together with an element 2, a gear wheel 2, placed on the shaft constitutes a jointing. The shaft 1 comprises, as shown in fig. 1, six eccentrically placed sections 3 with a diameter d, where the combined cross-sectional area of the sections in pairs 4a,b,c are of equal size. Fig.2 (section A-A) shows the substantially stadium-shaped cross-section 12 of a pair of eccentrically placed sections 3.

Fig. 3 shows a gear wheel 2 with a stadium-shaped hole 5. The manufacturing process for the stadium shaped hole 5 in the gear wheel 2 can be considerably facilitated by the gear wheel being eccentrically clamped in relation to the drill axis of the drilling machine. After drilling a first hole the gear wheel can be rotated around its own center for drilling of a second hole, the first and second hole together makes up a substantially stadium-shaped hole which has to be machined, with for example a milling machine, for obtaining a complete stadium-shape.

By the gear wheel or hub 2 being placed on the shaft 1 over a pair 4a,b,c radial locking is obtained between the placed gear wheel 2 and the shaft 1, which contributes to the simple mounting. According to a first embodiment, the three pairs 4a,b,c has equally large combined cross-sections 12 which means that the stadium shaped hole 5 shall be of the same size in all of the three gear wheels 2 that can be placed on the shaft. Therefore it does not matter in which order the gear wheels 2 are placed, as it concerns the jointing.

Fig. 1 also shows a stop 9a and a releasable stop 9b that locks the gear wheels 2 axially. One of the stops 9a are fixedly attached which results in that it is only possible to place the gear wheels on the shaft from one direction. A centered section on the shaft 1 constitutes the fixed stop 9a, the diameter of the centered section is large enough to lock a gear wheel with a stadium-shaped cross-section, see fig. 3.

Fig. 1 also shows that it is conceivable with yet another element 11 placed on the element 2 placed on the shaft, such as a lever 11, which facilitates the transport of the element along the shaft 1 of an element 2 placed on the shaft 1, during for example gear-shifting.

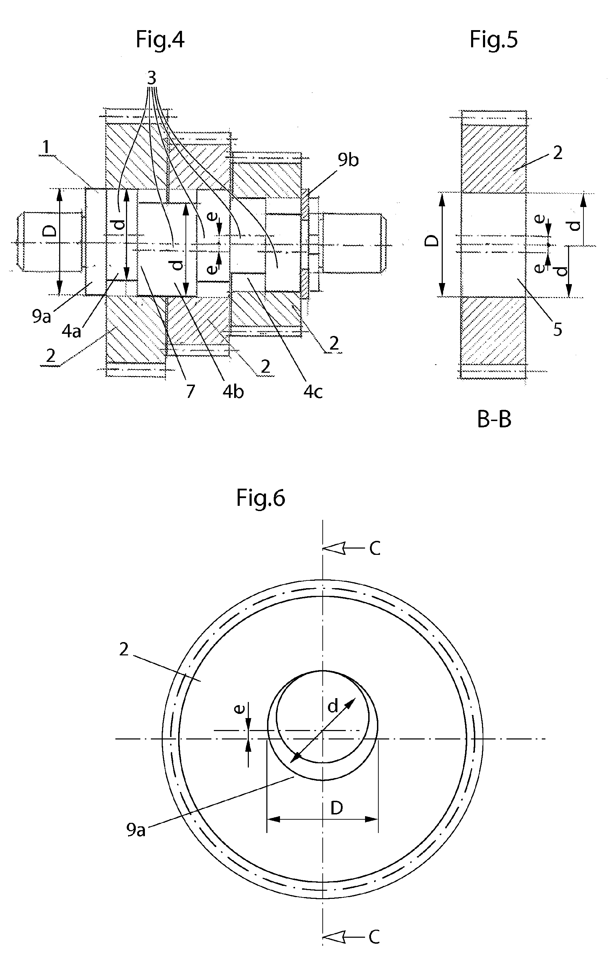

Fig. 4 shows a shaft 1, according to a second embodiment, and how the shaft together with an element 2 placed on the shaft 1, a gear wheel, constitutes a jointing, The shaft 1 comprises, according to a second embodiment, five eccentrically placed sections 3, wherein the combined cross-section of the elements, in pairs 4a,b,c, corresponds to the a through-going hole 5 placed centered in the gear wheel, according to fig. 6. The through-going hole 5 is stadium-shaped and the combined cross-section of a pair of eccentrically placed sections 4a,b,c can be said to be substantially stadium-shaped. The stadium-shaped cross-section of the two eccentrically placed sections 3 locks the gear wheel 2 to the shaft radially, at the same time as the gear wheel 2 can continue to be movable axially, which contributes to the simple mounting.

In the second embodiment, the area of the combined cross-section of one pair 4a,b is different from the combined cross-section of another pair 4c. This can be suitable when there are differences in the available space in for example a gearbox, or when there are differences in size between the elements 2 placed on the shaft 1. It may also be advantageous when there are differences in the torque which should be transferred from the shaft 1 to a specific element placed on the shaft 1, the more torque that shall be transferred the larger is the force on the jointing, therefore the eccentricity should preferably be larger when larger torque should be transferred.

The second embodiment in fig. 4 also shows that the one of the eccentrically placed sections 3 preferably is at least as wide 7 in the length axis of the shaft, as the hole 5 of the hub 2 towards the shaft 1. This enables the rotation of the gear wheel 2 without and torque transfer when it is axially positioned with the hole 5 entirely over that section 3, which has the width 7. Fig. 4 shows a fixed stop 9a and a releasable stop 9b that locks the gear wheels axially. Since one of the stops 9a is fixedly attached the gear wheels can only be placed on the shaft from one direction. According to the second embodiment a section of the shaft 1 constitutes the fixed stop 9a, the section having a diameter large enough to lock the gear wheel with a stadium-shaped cross-section, see fig. 3. Fig. 5 shows a cross-section (B-B of fig. 3) of a gear wheel 2 with a stadium-shaped hole 5.

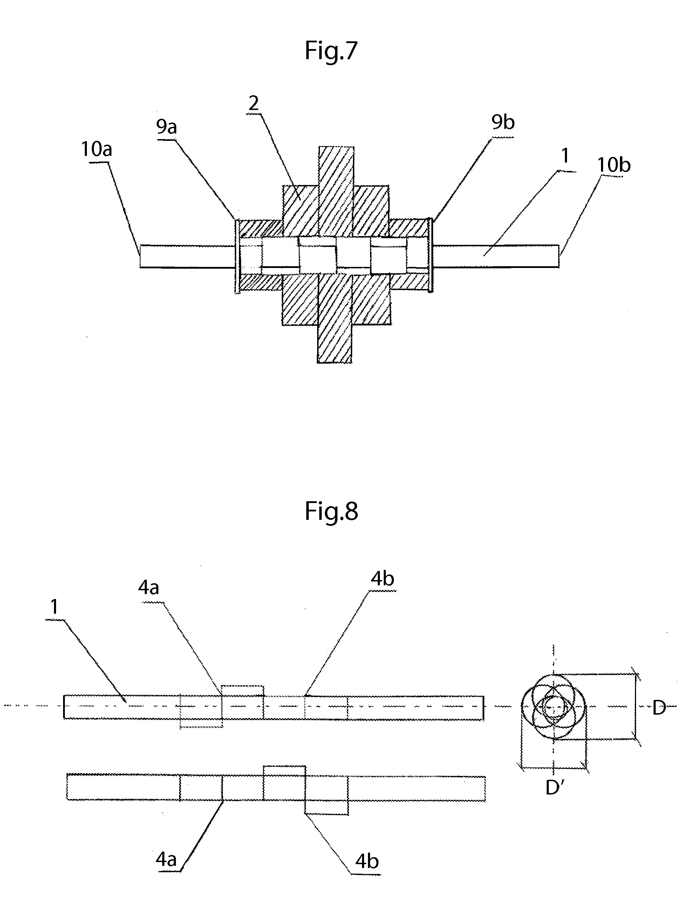

Fig. 7 shows a third embodiment with two releasable stops 9a,9b. Two releasable stops allows placing of the elements 2 on the shaft 1, in the present embodiment, the gear wheels 2, from both ends 10a, 10b.

Fig. 8 shows the shaft 1 in a fourth embodiment where a pairs 4a cross-section D is radially angle-displaced in relation to the cross-section of the length axis of another pair, preferably 85-90 degrees. Fig. 8 also shows the combined cross-section 12 of the shaft 2.

It is also conceivable with a fifth embodiment (not shown) with two stops fixedly attached to the shaft 1 on each side of the gear wheels, if the shaft is severable, i.e. comprises two shafts, this enables the placing of shafts from the center. It is conceivable that the shaft 1 constitutes the fixed stops.

## Claims

1. Jointing for torque transfer between at least one shaft (1) and at least one element placed (2) on the shaft (1), wherein the shaft (1) comprises at least two eccentrically placed sections (3), wherein the combined axial cross-section (12) of at least two of said sections (3) corresponds to a through-going hole (5) in the element (2) or elements (2) placed on the shaft (1), which enables torque transfer between the shaft (1) and an element (2) placed on the shaft (1), when said element is placed over at least two of said sections (3), **characterized in that** at least one of the at least two eccentrically placed sections (3) is at least as wide (7) in the length axis of the shaft (1) as the hole (5) for said shaft (1) in the element (2) placed on the shaft (1), which enables rotation of the element (1) placed on the shaft (1) without any torque transfer when it is positioned with the hole (5) axially entirely over a section (3) of such width (7).

2. Jointing according to claim 1, **characterized in that** the eccentric sections (3) of the shaft (1) are circular.

3. Jointing according to claim 1, **characterized in that** at least two eccentric sections (3) of the shaft are placed next to each other.

4. Jointing according to claim 2, **characterized in that** two circular eccentric sections, radially displaced in inverse directions, on the shaft (1) constitutes a pair (4) with a combined cross-section (12) which is substantially stadium-shaped.

5. Jointing according to claim 2, **characterized in that** the cross-section of a length axis (D) of a pair (4a) is radially angle displaced in relation to the cross-section of a length axis (D') of one or more other pairs (4b).

6. Jointing according to claim 2, **characterized in that** the radial angle displacement is between 85 and 95 degrees.

7. Jointing according to claim 2, **characterized in that** the area of a pairs (4a) combined cross-section (12) is different from the area of the combined cross-section (12) of one or more other pairs (4b).
